# EUROPÄISCHE PATENTSCHRIFT

(11) **EP 1 747 307 B1**
(45) Veröffentlichungstag und Bekanntmachung des Hinweises auf die Patenterteilung: **16.07.2008**
(21) Anmeldenummer: 05707656.4
(22) Anmeldetag: 28.02.2005
(51) Int. Cl.: D01F 2/00, D01D 1/02, D01D 5/06, C08B 1/00

(54) **LYOCELL-VERFAHREN MIT POLYMERISATIONSGRADABHÄNGIGER EINSTELLUNG DER VERARBEITUNGSDAUER**
LYOCELL METHOD COMPRISING AN ADJUSTMENT OF THE PROCESSING DURATION BASED ON THE DEGREE OF POLYMERISATION
PROCEDE LYOCELL COMPRENANT UN REGLAGE DE TEMPS DE TRAITEMENT SUR LA BASE DU DEGRE DE POLYMERISATION

(30) Priorität: 13.05.2004 DE 102004024030
(43) Veröffentlichungstag der Anmeldung: 31.01.2007
(73) Patentinhaber: Zimmer Aktiengesellschaft, 60388 Frankfurt am Main (DE)
(72) Erfinder: ZIKELI, Stefan, A-4844 Regau (AT); LONGIN, Michael, A-4849 Vöcklabruck (AT)
(74) Vertreter: Grünecker, Kinkeldey, Stockmair & Schwanhäusser Anwaltssozietät
(86) Internationale Anmeldenummer: PCT/EP2005/002088
(87) Internationale Veröffentlichungsnummer: WO 2005/113868

(56) Entgegenhaltungen:
- DE-A1- 10 029 044
- US-A1- 2003 025 252

## Beschreibung

Die Erfindung betrifft ein Verfahren zum Herstellen von Lyocell-Fasern, bei dem eine Cellulose mit einem vorbestimmten Polymerisationsgrad eingebracht und aus der Cellulose unter Beimengung eines Behandlungsmediums eine Celluloselösung oder zunächst eine Cellulosesuspension und aus dieser dann die Celluloselösung hergestellt wird und bei dem die Celluloselösung zu Endlosformkörpern extrudiert wird.

Die Erfindung betrifft außerdem eine Vorrichtung zur Herstellung von Lyocell-Fasern, mit einer Mischeinrichtung, der eine Cellulose zuführbar und in der unter Zugabe eines Behandlungsmediums eine Celluloselösung direkt oder unter Bildung einer Cellulosesuspension verarbeitbar ist, mit einem Spinnkopf, durch den die Celluloselösung zu Endlosformkörpern extrudierbar ist, und mit einer Fördereinrichtung, durch welche die Cellulosesuspension und/oder die Celluloselösung von der Mischeinrichtung zum Spinnkopf förderbar ist.

Derartige Verfahren und Vorrichtungen sind aus der Lyocell-Technologie bekannt. Bei der Lyocell-Technologie werden Fäden, Fasern, Folien und Membranen als Endlosformkörper aus der Spinnmasse enthaltend Cellulose, Wasser und tertiärem Aminoxid extrudiert. Die Lyocell-Technologie ersetzt aufgrund ihrer Umweltverträglichkeit zunehmend die herkömmlichen Viskoseverfahren. Die Umweltverträglichkeit des Lyocell-Verfahrens rührt aus der Lösung der Cellulose ohne Derivatisierung in einem organischen, wässrigen Lösungsmittel. Aus dieser Celluloselösung werden dann Endlosformkörper, beispielsweise Fasern und Folien, extrudiert. Durch die Extrusion der Formkörper und die im Zuge der Extrusion erfolgende Orientierung und Regenerierung der Cellulose erhält man Formkörper hoher Festigkeit mit vielfältigen Anwendungsmöglichkeiten im textilen und nicht textilen Bereich. Der Name Lyocell wurde von der BISFA (International Bureau for the Standardisation of man-made Fibres) vergeben. Im Stand der Technik ist das Lyocell-Verfahren mittlerweile gut dokumentiert.

So sind als Lösungsmittel für die Cellulose aus der US-B-2179181 tertiäre Aminoxide bekannt, die Cellulose ohne Derivatisierung zu lösen vermögen. Aus diesen Lösungen können die cellulosischen Formkörper durch Fällung gewonnen werden.

Die Verarbeitung der in einem wässrigen Aminoxid, speziell N-Methylmorpholin-N-oxid (NMMNO), gelösten Cellulose ist jedoch sicherheitstechnisch nicht unproblematisch, da der Polymerisationsgrad der Cellulose beim Auflösen der Cellulose in NMMNO abnimmt. Außerdem weisen Aminoxide speziell im System NMMNO-Cellulose-Wasser im Allgemeinen eine nur begrenzte Thermostabilität sowie eine Neigung zu einer spontanen exothermen Reaktion auf. Um diese Probleme zu überwinden und Lyocell-Fasern wirtschaftlich herstellen zu können, gibt es im Stand der Technik eine Reihe von Lösungsansätzen.

So ist in der US-A-4144080 ausgeführt, dass sich bei hohen Temperaturen die Cellulose rascher in einem tertiären Amin-N-oxid auflöst und eine einheitlichere Lösung bildet, wenn die Cellulose mitsamt den bevorzugten Zugaben an tertiärem Amin-N-oxid und Wasser gemahlen wird. In der WO-94/28219 ist ein Verfahren zur Herstellung einer Celluloselösung beschrieben, bei dem gemahlener Zellstoff und eine Aminoxidlösung in eine waagerechte, zylinderförmige Mischkammer gegeben werden. Die Mischkammer weist um deren Längsachse drehbare, axial beabstandete Rührelemente auf. Als Aminoxide können dabei neben NMMNO auch N-Methylpiperidin-N-oxid, N-Methylpyrolidonoxid, Dimethylcyclohexylamin-oxid und andere verwendet werden. Die Mischung in der Mischkammer findet zwischen 65°C und 85°C statt. Gemäß der Lehre der WO-A-98/005702 wird der Zellstoff in einer Vorrichtung mit der wässrigen Lösung des tertiären Aminoxids gemischt, wobei die Mischvorrichtung ein Mischwerkzeug und einen während des Mischens rotierenden Behälter aufweist.

In der WO-A-98/005702 ist das Mischwerkzeug dahingehend verbessert, dass es als Paddel, Leiste oder Wendel ausgebildet ist und während des Mischens bevorzugt eine Belagbildung an den Innenoberflächen des Behälters verhindert. In der WO-A-96/33934 ist eine Puffervorrichtung beschrieben, die ein Mischgefäß und eine Förderschnecke als Austragseinrichtung umfasst. Auf diese Weise soll trotz einer batchweisen Zufuhr der Cellulose eine kontinuierliche Herstellung der Celluloselösung ermöglicht werden.

Das Verfahren der WO-A-96/33934 wurde mittlerweile durch das Verfahren der WO-96/33221 weiterentwickelt, bei dem eine homogene Cellulosesuspension aus zerkleinerter Cellulose und einer wässrigen Aminoxidlösung in einem einzigen Schritt hergestellt wird. Hierzu wird die zerkleinerte Cellulose mit dem flüssigen, wässrigen tertiären Aminoxid in Kontakt gebracht und so eine erste Mischung gebildet. Die erste Mischung wird auf eine Fläche schichtartig ausgebreitet und unter intensivem Mischen über diese Fläche transportiert. Dieser Prozess kann kontinuierlich durchgeführt werden. Weitere Verfahren, bei denen die Celluloselösung in Form einer dünnen Schicht behandelt wird, sind auch aus der EP-A-0356419, der DE-A-2011493 und der WO-A-94/06530 bekannt.

Auch die Zerkleinerung der Cellulose selbst ist Gegenstand von Patentveröffentlichungen. So ist in der US-A-4416698 als Vorteil erwähnt, wenn die Cellulose auf eine Teilchengröße von weniger als 0,5 mm gemahlen wird. In der WO-A-95/11261 wird vorzerkleinerter Zellstoff in eine wässrige Lösung eines tertiären Aminoxids eingebracht, um eine erste Suspension herzustellen. Diese erste Suspension wird anschließend gemahlen und dann unter Wärmezufuhr und vermindertem Druck in eine formbare Celluloselösung überführt. Um den beim Mahlen bzw. Zerkleinern der Cellulose anfallenden Staub in das Verfahren zurückzuführen, sind bei der WO-A-94/28215 Filter eingesetzt, durch die der Cellulosestaub von der Luft getrennt wird. In der WO-A-96/38625 ist eine Anlage beschrieben, die sowohl Zellstoffballen als auch Zellstoff in Blattform zerkleinern kann. Hierzu ist ein Abwurfschacht vorgesehen, der in einer Vorrichtung zum Vorzerkleinern des Zellstoffes mündet.

In der EP-B-0818469 wird vorgeschlagen, Zellstoff in wässrigen Aminoxidlösungen zu dispergieren und die so erhaltene Dispersion mit Xylanasen zu behandeln.

Neben diesen Bemühungen, eine homogene und spinnfähige Celluloselösung wirtschaftlich herzustellen, gibt es auch Versuche, das Problem der unter einer exothermen Reaktion spontan eintretenden Abbauerscheinungen der Celluloselösung zu beherrschen. In Buijtenhuis et al., The Degradation and Stabilisation of Cellulose Dissolved in NMMNO, in: Papier 40 (1986) 12, 615-618 sind Untersuchungsergebnisse beschrieben, wonach Metalle in der Celluloselösung die Zersetzungstemperaturen des NMMNO herabzusetzen scheinen. Vor allem Eisen und Kupfer scheinen die Zersetzung von NMMNO zu beschleunigen. Andere Metalle, wie z.B. Nickel oder Chrom, üben in entsprechendem Vorkommen und entsprechender Konzentration ebenfalls einen negativen Einfluss auf die Zersetzungseigenschaften der Celluloselösung auf, wenn sie in entsprechenden Konzentrationen vorkommen. Dennoch wird in der WO-A-94/28210 noch Edelstahl als Werkstoff für einen Spinnkopf verwendet, um den hohen Drücken während der Extrusion der Celluloselösung standzuhalten.

Hinzu kommt, dass das System NMMNO-Cellulose-Wasser im hochkonzentrierten NMMNO-Bereich die Eigenschaft besitzt, Metallionen aus den Prozessapparaten, wie den Leitungen, Filtern und Pumpen, herauszulösen, was die Systemstabilität herabsetzt. In der WO-A-96/27035 ist daher ein Verfahren zur Herstellung cellulosischer Formkörper beschrieben, bei dem zumindest ein Teil der mit der Celluloselösung in Kontakt befindlichen Materialien bis zu einer Tiefe von zumindest 0,5 µm zu zumindest 90% aus einem Element aus der Gruppe von Titan, Zirkonium, Chrom und Nickel enthalten soll. Wesentlich ist gemäß der Lehre der WO-A-96/27035, dass die restliche Zusammensetzung der Apparate und Rohrleitungen, insoweit sie in Kontakt mit der Celluloselösung kommen, kein Kupfer, Molybdän, Wolfram oder. Kobalt enthalten. Durch diese Maßnahme sollen gemäß der Lehre der WO-A-96/27035 exotherme Abbaureaktionen vermieden werden.

In der DE-C-198 37 210 schließlich, von der als nächstkommenden Stand der Technik ausgegangen wird, wird unabhängig vom Wassergehalt der eingesetzten Cellulose eine homogene Celluloselösung hergestellt. Hierzu wird die Cellulose, im Unterschied zur gängigen Methode, zunächst in Abwesenheit von NMMNO unter Homogenisierung in einem Pulper durch eine erste Scherzone gefördert und erst anschließend in einem minderwasserhaltiges NMMNO zugegeben.

Ein anderer Weg der Herstellung der Celluloselösung wird in der DE-A-44 39 149 beschritten, die den nächstkommenden Stand der Technik bildet. Gemäß dem Verfahren der DE-A-44 39 149 wird die Cellulose enzymatisch vorbehandelt. Um die Wirksamkeit der enzymatischen Vorbehandlung zu steigern, kann die Cellulose vor der Vorbehandlung unter Scherung in Wasser aufgeschlagen werden. Anschließend wird die vorbehandelte Cellulose von der Flotte abgetrennt und die abgetrennte Cellulose in eine Schmelze aus NMMNO und Wasser eingetragen. Dabei kann zweckmäßigerweise die abgetrennte Flotte nach Ergänzung der Wasser- und Enzymverluste zur Vorbehandlung zurückgeführt werden. Allerdings hat sich in der Praxis diese Art der Verfahrensführung als unzweckmäßig erwiesen, da die auf diesem Wege erhaltene Celluloselösung instabil ist.

Trotz all dieser verschiedenartigen Lösungsansätze, eine homogene und stabile Celluloselösung zu erhalten und diese unter Vermeidung exothermen Abbaureaktionen bis hin zu den Extrusionsöffnungen zu fördern, bleibt demnach die umweltfreundliche und wirtschaftliche Herstellung einer homogenen Celluloselösung und deren Stabilität problematisch. Des Weiteren ist problematisch, dass die Celluloselösung altert, was sich in einer mit der Zeit zunehmenden Verringerung des Polarisationsgrades ausdrückt. Bei einigen Cellulosen, die bereits mit einem niedrigen Polymerisationsgrad geliefert und zu einer Spinnmasse verarbeitet werden, kann die Alterung zu einer inakzeptablem Qualitätseinbuße führen.

Der Erfindung liegt daher die Aufgabe zugrunde, die bekannten Verfahren und Vorrichtungen der Lyocell-Technologie so zu verbessern, dass bei höchster Umweltverträglichkeit das Verfahren unabhängig von der Art der verwendeten Cellulose stabil und mit gleichbleibender Qualität durchgeführt werden kann.

Diese Aufgabe wird für das eingangs genannte Verfahren dadurch gelöst, dass der Polymerisationsgrad der Cellulose, der Cellulosesuspension und/oder der Celluloselösung überwacht wird und dass in Abhängigkeit von dem erfassten Polymerisationsgrad die Aufenthaltsdauer der Cellulose von ihrem Einbringen bis zu ihrer Extrusion auf höchstens 80 min und der Polymerisationsgrad der Celluloselösung kurz vor der Extrusion auf einen DP-Wert von wenigstens 400 DP eingestellt wird.

Für die eingangs genannte Vorrichtung wird diese Aufgabe erfindungsgemäß dadurch gelöst, dass eine Überwachungseinrichtung, durch welche ein Polymerisationsgrad der Cellulose, der Cellulosesuspension und/oder der Celluloselösung im Betrieb der Vorrichtung überwachbar ist, und durch eine Steuereinrichtung, durch welche die Verarbeitungsdauer vom Einbringen der Cellulose bis zu deren Extrusion im Spinnkopf in Abhängigkeit vom erfassten Polymerisationsgrad einstellbar ist.

Die erfindungsgemäße Lösung ist einfach und ermöglicht es, bei der Herstellung von Lyocell-Fasern beliebige Arten von Cellulose zu verwenden, unabhängig von ihrem Polymerisationsgrad. Durch die erfindungsgemäße Steuerung der Verarbeitungs- bzw. Aufenthaltsdauer der Cellulose von ihrer Verpulpung bis zu ihrer Extrusion zu Endlosformkörpem wird unabhängig vom Polymerisationsgrad der verarbeiteten Cellulose eine gleichbleibende Qualität der Lyocell-Fasern erhalten. Da zudem erfindungsgemäß der Polymerisationsgrad während der Verarbeitung der Cellulose überwacht wird, ist es nicht mehr notwendig, nur sorgfältig ausgewählte Cellulosen zu verarbeiten. Erfindungsgemäß können nunmehr beliebige Cellulosen verarbeitet werden, da eine Veränderung des Polymerisationsgrades in der Cellulose, der Cellulosesuspension und/oder der Celluloselösung während der Verarbeitung erfasst und die Verarbeitungsdauer entsprechend angepasst werden kann.

Das erfindungsgemäße Verfahren und die erfindungsgemäße Vorrichtung sind sowohl bei Lyocell-Verfahren anwendbar, bei welchen die Cellulose in einer wässrigen Lösung eines tertiären Aminoxids oder einem tertiären Aminoxid direkt verpulpt und daraus eine Celluloselösung hergestellt wird, als auch bei Verfahren, bei denen zunächst eine Cellulosesuspension enthaltend im Wesentlichen Wasser und Cellulose erzeugt und erst anschließend zur Bildung einer Celluloselösung ein tertiäres Aminoxid oder eine wässrige Lösung davon zugegeben wird.

In einer vorteilhaften Ausgestaltung des erfindungsgemäßen Verfahrens kann die Cellulose bzw. die Cellulosesuspension einer enzymatischen Vorbehandlung unterworfen sein. Im Zuge der enzymatischen Vorbehandlung kann beispielsweise eine flüssige Enzympräparation im Verhältnis 200:1 bezogen auf den Cellulosegehalt beigemengt werden. Als flüssige Enzympräparation kann ein Cellulase-Enzymkomplex, beispielsweise Cellupract AL70 der Fa. Biopract GmbH oder Cellusoft der Fa. Novo Nordisk verwendet werden. Um eine zu starke Verringerung des Polymerisationsgrades zu verhindern, insbesondere wenn Cellulosen mit von vorneherein geringen Polymerisationsgraden zu Lyocell-Fasern verarbeitet werden, kann in einer vorteilhaften Ausgestaltung die Dauer der enzymatischen Vorbehandlung in Abhängigkeit vom Polymerisationsgrad der eingebrachten Cellulose eingestellt werden. Zusätzlich kann auch der Polymerisationsgrad während der enzymatischen Vorbehandlung überwacht und bei einem starken Absinken des Polymerisationsgrades die Dauer der enzymatischen Vorbehandlung entsprechend verkürzt werden. Die enzymatische Vorbehandlung kann in einem Pulper durchgeführt werden.

Um den Polymerisationsabbau, insbesondere bei der Herstellung der Cellulose-Suspension und/oder bei der enzymatischen Vorbehandlung, in einem Rührwerk überwachen zu können, können zunächst die in der Rührtechnik bekannten Kennzahlen (Newton-Zahl, Reynolds-Zahl, Froude Zahl) ermittelt werden. Ferner können die Konzentrationen, Temperaturen, Mischzeiten und die Mischgüte exakt beobachtet und ermittelt werden, um Aussagen über das Abbauverhalten während der Emulsions- oder Suspensionsbildung zu erhalten. Die Temperatursteuerung kann über Temperaturmessgeräte, z.B. vom Typ Pt100, durchgeführt werden. Die exakte Konzentration kann durch kontinuierliche Durchflussmessgeräte für Emulsions- oder Suspendierungsmittel eingestellt werden. Die Cellulose kann über ein Differentialdosierwägesystem genau gemessen und ebenfalls kontinuierlich zugegeben werden.

Die Suspensionskriterien wie Befüllhöhe, Rührdauer und Konzentration an Emulsions-Suspensionspartikel über die Behälterhöhe können durch das Einführen einer Mess-Probenlanze in das Suspensionsgefäß bzw. den Pulper oder das Rührwerk und die Entnahme von suspendiertem Material ermittelt werden. Als besonders vorteilhaft hat sich erwiesen, wenn die Bauform des Bodens des Suspensionsgefäßes in Form eines Klöpperbodens oder Kugelbodens ausgeführt ist.

Bevorzugt wird als Rührorgan ein Impellerrüher eingesetzt. Es können jedoch auch Propeller, Schrägblattrührer, Scheibenrührer, gezahnte Rührer, Ankerrührer als auch Wendelrührer oder Koaxialrührwerke eingesetzt werden. Die an einen Antriebsmotor arigeschlossene Rührwerkswelle wird drehzahlmäßig gesteuert und überwacht. Ebenso erfolgt die Überwachung der Antriebsleistung der eingetragenen Energie sowie des Drehmomentes während des Emulgier- bzw. Suspendiervorganges zur Steuerung des enzymatischen Abbaues der Cellulose und damit zur Steuerung des Polymerisationsgrades über wenigstens einen Sensor.

Überraschenderweise wurde gefunden, dass es während der Zugabe des Enzymes zu, einem Abbau der Polymerketten kommt und die Abbaurate sich über die eingetragene Emulgier-Suspendierleistung bzw. der von einem Rührwerk eingetragenen Leistung ableiten lässt.

Der Polymerisationsgrad der Cellulose, der Cellulosesuspension und/oder der Celluloselösung kann durch inline-Sensoren wie Drehmomentwächter mit zugehöriger Software und Steuerung unter Rückführung auf die relative Viskositätsabnahme ermittelt werden. Derartige Systeme werden beispielsweise von der Firma PORPOISE angeboten. Alternativ kann der Polymerisationsgrad durch manuelle Probenentnahme mit anschließender analytischer Polymerisationsgradbestimmung erfolgen, was allerdings den Automatisierungsgrad des Verfahrens vermindert.

Als inline-Sensoren zur Leistungs- und Drehmomentmessung können beispielsweise Dehnungsmessstreifen, angebracht zwischen Antriebsmoter und Rührwerk oder Wirbelstromsensoren, eingesetzt werden. Die Wirbelstrommessung beruht darauf, dass durch mechanische Spannungen die Permeabilität für Magnetfeldlinien geändert wird. Das von einem ortsfesten Sensorkopf erzeugte magnetische Feld dringt in die Rührerantriebswelle ein und induziert je nach mechanischer Spannung in den Sekundärspulen des Sensorkopfes elektrische Spannungen die dem Drehmoment proportional sind. Die Messung erfolgt berührungslos und rückwirkungsfrei.

Voraussetzung für die Anwendung dieser Methode in der Suspensionsherstellungsanlage ist, dass auf der Antriebsseite der Rührwerkes ein freies, zugängliches Wellenstück vorhanden ist, auf das der Sensor ausgerichtet werden kann.

Nach einer manuellen Probenentnahme kann der Polymerisationsgrad über die Viskosität nach dem Cuoxam-Verfahren bestimmt werden. Die Messungen und Messsignale der inline-Sensoren werden mit den analytischen Ergebnissen geeicht , korreliert und dienen zur Prozesssteuerung und sind gegenüber einer manuellen Probenentnahme zu bevorzugen, da sie die Automatisierung der Steuerung der Aufenthaltsdauer ermöglichen.

Bei der Verarbeitung von Cellulosen mit niedrigem Polymerisationsgrad, beispielsweise einem DP-Wert von höchstens 550, wird die enzymatische Vorbehandlung über eine kürzere Zeitdauer durchgeführt als bei einer Cellulose mit einem höheren Polymerisationsgrad von beispielsweise wenigstens DP 700.

Die enzymatische Vorbehandlung kann zwischen 20 Minuten und 80 Minuten dauern, wobei der Polymerisationsgrad nach Beendigung der enzymatischen Vorbehandlung nicht unter einem DP-Wert von 520 sinkt. Sinkt der DP-Wert unter 520, wird die enzymatische Vorbehandlung beendet. Im Anschluss erfolgt die Celluloselösungsherstellung durch Abdampfen von Wasser aus dem enzymatischen abgebauten Zellstoff und dem wässrigen tertiären Aminoxid. Auch in diesem Prozessschritt kann der weitere DP Abbau über inline-Sensoren wie z.B. einem inline Viskositätsmessgerät z.B. der Fa. Porpoise überwacht und in Zusammenhang mit dem enzymatischen DP Abbau Verhalten gesteuert werden. Hierbei wird das Rheometer in eine Stichleitung der masseführenden Leitung eingebaut. Es wird dadurch eine sehr schnelle online Messung mit hoher Präzision erreicht. Durch die Viskositätsmessung können das viskose Fließen, die Strukturviskositäten, das polymere Schwellverhalten, die Elastizität , die Normalspannungen abgeleitet werden, welche wiederum zur Steuerung des enzymatischen Abbaues verwendet werden können.

Die Celluloselösung kann in einer weiteren vorteilhaften Ausgestaltung durch ein beheiztes Leitungssystem zum Spinnkopf transportiert werden. Da im Zuge dieses Transportes ebenfalls eine Verringerung des Polymerisationsgrades stattfindet, kann die Transportgeschwindigkeit der Celluloselösung im Leitungssystem in Abhängigkeit von dem Polymerisationsgrad der Celluloselösung, der vorangegangenen Cellulosesuspension und/oder der eingebrachten Cellulose, die in der Celluloselösung gelöst ist, eingestellt werden: Je niedriger der Polymerisationsgrad der Celluloselösung ist, umso schneller wird erfindungsgemäß die Celluloselösung zum Spinnkopf gefördert, um die Extrusion von Endlosformkörpern mit einem zu niedrigen Polymerisationsgrad zu verhindern. Die Verarbeitungsdauer der Celluloselösung bis zur Extrusion kann auf besonders einfache Weise in einer vorteilhaften Ausgestaltung dadurch eingestellt werden, dass die Fördergeschwindigkeit einer die Cellulosesuspension und/oder Celluloselösung fördernden Pumpenanordnung in Abhängigkeit vom Polymerisationsgrad eingestellt wird.

Die Verarbeitungsdauer der Cellulose von ihrem Einbringen bis zu ihrer Extrusion zu Endlosformkörpern wird vorzugsweise so eingestellt, dass sie höchstens 80 Minuten und/oder wenigstens 20 Minuten beträgt. In diesem Zeitfenster ist eine gute Lösung der Cellulose im tertiären Aminoxid zu erreichen und gleichzeitig kann der Polymerisationsgrad nicht unter Werte absinken, die zu Qualitätseinbußen bei den Lyocell-Fasern führen.

Im Folgenden wird eine Ausführungsform der Erfindung mit Bezug auf die Zeichnungen beispielhaft beschrieben. Dabei können die Merkmale, wie sie gemäß den obigen Ausführungsformen einzelnen vorteilhaften Ausgestaltungen der Erfindung zuzurechnen sind, beliebig miteinander kombiniert und auch weggelassen werden. Außerdem wird die Erfindung anhand von Versuchsbeispielen dokumentiert.

Es zeigen:
- Fig. 1: eine Ausführungsform einer erfindungsgemäßen Vorrichtung zur Herstellung einer Celluloselösung in einer schematischen Darstellung, wobei durch die Ausführungsform das erfindungsgemäße Verfahren ausführbar ist;
- Fig. 2: eine schematische Darstellung der Verfahrensschritte zur Herstellung der Cellulosesuspension;
- Fig. 3: eine schematische Darstellung des Verlaufs der Menge der ausgebrachten Eisenionen über die Zeit;
- Fig. 4: eine schematische Darstellung des chemischen Sauerstoffbedarfs im Presswasser über die Zeit;
- Fig. 5: eine schematische Darstellung eines ersten Verfahrens zur Steuerung des Metallionen-Gehaltes;
- Fig. 6: eine schematische Darstellung des Leistungseintrages eines Rührwerks für eine Cellulose-Suspension über die Aufenthaltszeit;
- Fig. 7: zeigt eine schematische Darstellung der Abnahme des Polymerisationsgrades über die Aufenthaltszeit der Cellulose-Suspension.

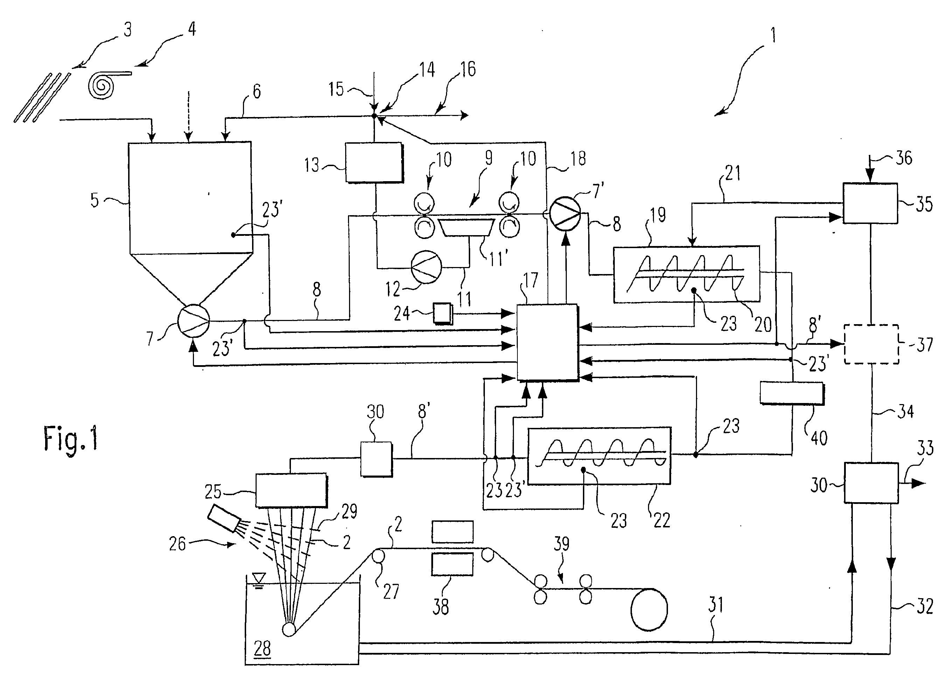

Fig. 1 zeigt eine Anlage 1 zur Herstellung von Endlosformkörpern 2, beispielsweise Spinnfäden, aus einer spinnbaren Celluloselösung enthaltend Wasser, Cellulose und tertiäres Aminoxid.

Zunächst wird Cellulose in Form von Blättern bzw. Platten 3 und/oder Rollen 4 einem Pulper 5 batchweise zugeführt. Im Pulper 5 wird die Cellulose 3, 4 mit Wasser als Behandlungsmedium, symbolisch dargestellt durch den Pfeil 6, aufgeschlagen und eine Cellulosesuspension, vorzugsweise noch ohne Lösungsmittel bzw. Aminoxid, gebildet. Zur Homogenisierung und Stabilisierung der Cellulosesuspension können Enzyme oder Enzymlösungen zugesetzt werden.

Die Menge des zugeschlagenen Wassers 6 wird in Abhängigkeit vom Wassergehalt der Cellulose bestimmt. Typischerweise beträgt der Wassergehalt der eingesetzten Cellulose zwischen 5 und 15 Masseprozent. Diese Schwankungsbreite wird durch entsprechende Änderung der Zugabe von Wasser ausgeglichen, so dass der Wassergehalt der Cellulosesuspension bzw. das Flottenverhältnis Feststoff/Flüssigkeit in etwa konstant bleibt bzw. einen frei gewählten Wert erreicht.

Aus dem Pulper 5 wird die Cellulosesuspension durch eine Dickstoffpumpe 7 über ein Leitungssystem 8 zu einer Presseinrichtung 9 geleitet, wobei die Cellulosesuspension aus Wasser und Cellulose bevorzugt bei einem Temperaturbereich von 60 bis 100°C gehalten wird.

In der Presseinrichtung wird die vom Pulper 5 erzeugte Cellulosesuspension beispielsweise durch rotierende Walzen 10 abgepresst. Das abgepresste Wasser bzw. Presswasser 11 wird durch ein Auffangorgan 11' aufgefangen und durch ein Fördermittel 12, durch eine optionale Filtereinrichtung 13 und durch eine Mischeinrichtung 14 zumindest zum Teil als Wasser 6 wieder dem Pulper 5 als Behandlungsmedium zurückgeführt. Die Presseinrichtung 9 kann auch mit einer Absaugeinrichtung (nicht gezeigt) versehen sein, mit der überschüssiges Wasser aus der Cellulosesuspension abgesaugt wird. Das abgesaugte Wasser wird bei dieser Ausgestaltung wie das Presswasser zumindest zum Teil wieder zum Pulper 5 zurückgeführt. Im Sinne der Erfindung ist auch ein abgesaugtes oder auf einem anderen Wege aus der Cellulosesuspension entferntes Wasser ein Presswasser, das zum Aufschlagen der Cellulose wiederverwendet werden kann.

Der Filter 13 kann einen oder mehrere Oberflächenfilter, Tiefenfilter, Membranfilter, Plattenfilter, Spaltfilter, Separatoren, Zentrifugen, Hydrozyklone, Bandfilter und Vakuumbandfilter, Kerzenfilter, Filterpressen, Rotationsfilter, Rückspülfilter, Mehrschichtfilter und auch Flotationsverfahren umfassen. Außerdem kann im Filter 13 das Presswasser 11 osmotisch behandelt werden; alternativ oder zusätzlich können Metallionen sowie Teilchen aus dem Presswasser 11 herausgefiltert werden bzw. metallbindende Zusätze dem Presswasser 11 zugeführt werden.

Über die Mischeinrichtung 14 werden die jeweiligen Anteile des rückgeführten Behandlungsmediums 11 und des aus einer weiteren Frischquelle zugeführten frischen Behandlungsmediums 15, beispielsweise Frischwasser, in dem dem Pulper 5 zugeführten Wassers eingestellt. Außerdem wird durch die Mischeinrichtung 14 der Anteil des Behandlungsmediums 11 eingestellt, der durch eine Abwasserleitung 16 aus der Anlage 1 geleitet bzw. ausgeschleust wird.

Die Mischeinrichtung 14 kann beispielsweise ein Mehrwegventil oder mehrere Ventile umfassen. Die Mischeinrichtung 14 wird durch eine Steuereinrichtung 17 gesteuert, so dass auf ein Ausgangssignal der Steuereinrichtung über wenigstens eine Steuerleitung 18 die Anteile des Presswassers 11 und des Frischwassers 15 in dem dem Pulper 5 zugeführten Wasser 6 auf variabel vorgebbare Werte eingestellt werden können.

Nach dem Abpressen wird die Cellulosesuspension weiter durch das Leitungssystem 8 in ein Rühr- oder Fördermittel 19 transportiert, in dem über ein Rühr- oder Förderwerkzeug 20, wie Schnecken, Paddel oder Schaufeln, eine auf die Cellulosesuspension wirkende Scherspannung erzeugt wird. Für das Rühr- und Fördermittel 19 können keine Ringschichtmischer eingesetzt werden, wie sie beispielsweise von der Fa. DRAIS Misch- und Reaktionssysteme stammen und unter der Bezeichnung CoriMix® vertrieben werden. Die Ringschichtmischer dienen nämlich lediglich der Befeuchtung bzw. lmprägnierung von trockenen cellulosischen Materialien, die im hier beschriebenen Prozess nicht eingesetzt werden.

Im Bereich der Scherspannungen des Rühr- und Fördermittels 19, in der sogenannten Scherzone, wird über eine Leitung 21 ein Behandlungsmedium wie tertiäres Aminoxid, insbesondere N-Methylmorpholin-N-oxid, in wässriger Form der Cellulosesuspension mit einem Molverhältnis NMMNO/H₂O zwischen 1:1 und 1:2,5 als Lösungsmittel für die Cellulose zugeführt. Außerdem können in der Scherzone Zusatzstoffe wie Stabilisatoren und Enzyme, organische Additive, Mattierungsstoffe, Alkalien, feste oder flüssige Erdalkalien, Zeolithe, feinpulverisierte Metalle wie z.B. Zink, Silber, Gold, Platin zur Herstellung von antimikrobiellen und/oder elektro- bzw. wärmeleitfähigen Fasern während und nach dem Spinnprozess, und/oder Farbstoffe der Cellulosesuspension beigemengt werden. Die Konzentration der Zusatzstoffe kann im Bereich von 100 bis 100.000 ppm bezogen auf das Faserprodukt gesteuert werden.

Die Konzentration des zugeführten NMMNO hängt von der Wasserhaltigkeit der sich gerade in der Cellulosesuspension befindlichen Cellulose 3, 4 ab. Das Rühr- oder Fördermittel 19 wirkt als ein Mischer, in dem das tertiäre Aminoxid mit der Cellulosesuspension vermischt und die Celluloselösung hergestellt wird. Anschließend wird die mit NMMNO versetzte Celluloselösung über das Leitungssystem 8 zu einem zweiten Rühr- bzw. Fördermittel 22 gefördert. Im Rühr- bzw. Fördermittel 22 kann eine Verdampfungsstufe umfasst sein. Ab dem Rühr- bzw. Fördermittel 22 kann das Leitungssystem beheizt sein. Das beheizte Leitungssystem ist in Fig. 1 im Gegensatz zu dem unbeheizten Leitungssystem 8 mit dem Bezugszeichen 8' versehen. Insbesondere kann ein Leitungssystem verwendet werden, wie es in der WO 01/88232 A1, der WO 01/88419 A1 und der WO 03/69200 A1 beschrieben ist. Sowohl im Leitungssystem 8 als auch im Leitungssystem 8' können Fördereinrichtungen 7' in Form von Pumpen angeordnet sein, um die Cellulosesuspension und/oder die Celluloselösung zu fördern.

Nach der Zugabe des tertiären Aminoxids wird in der Leitung 8' und/oder in wenigstens einer der Scherzonen 19, 22, oder vor und/oder nach einer der Scherzonen, der Metallionengehalt der Celluloselösung, insbesondere von Kupfer- und Eisenionen, über Sensoren 23 gemessen und ein für den Metallgehalt oder den Gehalt an einzelnen destabilisierenden Metallionen, wie Eisen-, Chrom-, Kupfer- und/oder Molybdänionen, repräsentatives Signal an die Steuereinrichtung 17 ausgegeben. Der Metallionen-Gehalt kann in einer weiteren Ausgestaltung alternativ oder zusätzlich zu einer automatischen inline-Probenentnahme auf nasschemischem Wege nach einer manuellen Probenentnahme in einem Laboranalyseautomaten bestimmt und von dort automatisch oder manuell an die Steuereinrichtung 17 weitergegeben werden. Allerdings ist bei einer manuellen Probenentnahme gegenüber der automatischen inline-Probenentnahme direkt aus dem Leitungssystem 8, 8' nachteilig, dass die Rückkopplung zur Steuerung des Metallionen-Gehalts einen manuellen Verfahrensschritt beinhaltet und damit nicht automatisiert werden kann.

Die Steuereinrichtung 17 vergleicht den von den Sensoren 23 gemessenen Metallionen-Gehalt mit vorbestimmten Grenzwerten und gibt in Abhängigkeit von diesem Metallionen-Gehalt ein Signal an die Mischeinrichtung 14 aus. Durch das Steuerungssignal an die Mischeinrichtung 14 wird in Abhängigkeit vom Gehalt der destabilisierenden Metallionen der Celluloselösung die Zusammensetzung des an den Pulper 5 geführten Wassers 6 als Behandlungsmedium eingestellt und der Metallgehalt bzw. der Gehalt an einzelnen Metallionen in der mit tertiärem Aminoxid versetzten Celluloselösung auf einen vorbestimmten Wert geregelt. Da sich die Konzentration an Reaktionen in der Celluloselösung nach der Verdampfungsstufe erhöht, ist bevorzugt ein Sensor vorgesehen, der den Metallgehalt der Celluloselösung nach Zugabe aller Bestandteile und nach sämtlichen Verdampfungsstufen überwacht.

Ist beispielsweise der Gehalt der Celluloselösung an destabilisierenden Metallionen, wie er durch die Sensoren 23 oder auf nasschemischem Wege erfasst wird, zu hoch, so wird der Anteil von Frischwasser in dem dem Pulper 5 zugeführten Wasser 6 erhöht. Der Metallgehalt wird dabei durch die Steuereinrichtung 17 so eingestellt, dass er unterhalb eines Stabilitätsgrenzwertes von 10 mg/kg bleibt. Der Metallgehalt kann auch vor der Bildung der Celluloselösung, also noch in der Cellulosesuspension, festgestellt werden, wobei diese Messung angemessener ist als die Messung des Metallgehalts direkt in der Celluloselösung.

Als Sensoren 23 können Geräte zur Atomabsorptionsmessung, Massenspektrometer, optische Detektoren zur Erfassung von Fluoreszensspektren, Emissionspektren oder von Raman-Streuung verwendet werden. Derartige Sensoren sind bekannt und werden von diversen Herstellern, beispielsweise von Perkin Elmer hergestellt.

Ferner kann über inline-Sensoren 23', beispielsweise der Firma PORPOSSE, deren Anzahl im Übrigen beliebig ist, der Polymerisationsgrad der Cellulosesuspension und/oder der Celluloselösung ermittelt werden, beispielsweise über eine Viskositätsmessung. Anstelle eines Inline-Sensors 23' kann auch an der entsprechenden Stelle manuell eine Probe entnommen und deren Polymerisationsgrad auf übliche Weise, beispielsweise nach Cuoxam-Verfahren, bestimmt werden. Als Sensoren 23' können ferner Sensoren verwendet werden, die den Leistungseintrag von Rührwerken überwachen, wie Drehmomentsensoren, Wirbelstromsensoren oder Dehn-Mess-Streifen.

Wie in Fig. 1 gezeigt ist, sind die Polymerisationsgradsensoren 23' im Pulper 5 und im Leitungssystem 8, 8' angeordnet. Der gemessene Polymerisationsgrad wird an die Steuereinrichtung 17 in Signalform geleitet. Die inline-Sensoren sind Rheometer der Firma PORPOISE.

Die Steuereinrichtung 17 berücksichtigt bei der Steuerung der Zusammensetzung des Wassers 6 den im Vorab bestimmten Metallgehalt der dem Pulper 5 zugeführten Cellulose 3, 4. Hierzu kann über ein Eingabegerät 24 der analysierte Metallgehalt der gerade verwendeten Cellulose 3, 4 an einzelnen Metallionen oder der Gesamtgehalt an Metall der Steuereinrichtung 17 und/oder deren Polymerisationsgrad eingegeben werden. Die Voreinstellung des Metallgehaltes wird bei der Bestimmung der Anteile des Presswassers und des Frischwassers in dem dem Pulper 5 zugeführten Wasser berücksichtigt. Beispielsweise wird bei Cellulosen mit hohem Metallgehalt von Vornherein ein höherer Anteil von Frischwasser 15 dem Pulper 5 zugeführt oder es werden bestimmte metallbindende Zusätze der Cellulosesuspension beigemischt.

Sinkt der Metallgehalt, wie er von den Sensoren 23 in der mit tertiären Aminoxid versetzten Celluloselösung erfasst wird, unter einen vorbestimmten Grenzwert, der als ausreichend für die Sicherheit gegen exotherme Reaktionen betrachtet wird, beispielsweise 10 mg/kg, so wird der Anteil des Presswassers in dem dem Pulper 5 zugeführten Wasser erhöht. Dadurch wird bei ausreichender Sicherheit gegen exotherme Reaktionen weniger Frischwasser verbraucht und weniger Presswasser an die Umwelt abgegeben.

Die Steuereinrichtung 17 steuert ferner die Aufenthalts- bzw. Verarbeitungsdauer der Cellulose 3, 4 in der Anlage 1 in Abhängigkeit vom Polymerisationsgrad, wie er von Hand in das Eingabegerät 24 eingegeben oder während des Betriebs von den Sensoren 23' bzw. mittels manuell entnommener und im Labor analysierter Proben ermittelt wurde. Die Sensoren 23' und/oder die Laboranalysegeräte für die von Hand entnommenen Proben dienen dabei als Überwachungseinrichtungen für den Polymerisationsgrad. Die Verarbeitungsdauer der Cellulose von ihrer Einbringung in den Pulper 5 bis zu ihrer Extrusion in einem Extrusionskopf 25 wird dabei so eingestellt, dass nahe des Extrusionskopfes 25, kurz vor der Extrusion der Celluloselösung der Polymerisationsgrad nicht unter 450 DP, vorzugsweise nicht unter 550 DP sinkt. Wird eine Cellulose 3, 4 verarbeitet, die bereits einen geringen Polymerisationsgrad aufweist, so wird die Transportgeschwindigkeit der Cellulosesuspension und der Celluloselösung im Leitungssystem 8, 8' erhöht, wodurch sich die Aufenthaltsdauer der Cellulose in der Anlage 1 verringert.

Die Steuereinrichtung 17 steuert insbesondere die Fördereinrichtung 7, welche den Pulper 5 entleert. Bei Cellulosen mit einem geringen Polymerisationsgrad wird die Vorbehandlung und Verpulpung verkürzt, indem die Pumpe 7 früher betätigt wird. Gleichzeitig wird die Förderleistung weiterer Pumpen 7' in den Leitungssystemen 8, 8' erhöht. Die Dauer der Vorbehandlung in der Anlage 1 beträgt beispielsweise bei Cellulosen 3, 4 mit einem hohen Polymerisationsgrad von wenigstens 600 DP um die 40 Minuten, bei Cellulosen 3, 4 mit einem relativ geringen Polymerisationsgrad von 400 DP und weniger höchstens 25-30 Minuten.

Nach dem Rühr- bzw. Fördermittel 22 wird die nunmehr extrudierbare Celluloselösung zu dem Extrusionskopf 25 geleitet, der mit einer Vielzahl von Extrusionsöffnungen (nicht gezeigt) versehen ist. Durch jede dieser Extrusionsöffnungen wird die hochviskose Celluloselösung zu jeweils einem Endlosformkörper 2 in einen Luftspalt 26 extrudiert. Eine Orientierung der Cellulosemoleküle findet durch eine Verstreckung der nach der Extrusion noch viskosen Celluloselösung statt. Hierzu wird die extrudierte Celluloselösung über ein Abzugswerk 27 mit einer Geschwindigkeit von den Extrusionsöffnungen weggezogen, die größer als die Extrusionsgeschwindigkeit ist.

Nach dem Luftspalt 26 durchqueren die Endlosformkörper 2 ein Fällbad 28 enthaltend ein Nichtlösungsmittel wie Wasser, wodurch die Cellulose in den Endlosformkörpern 2 ausgefällt wird. Im Luftspalt 26 werden die Endlosformkörper 2 durch einen Kühlgasstrom 29 gekühlt. Hierbei hat sich entgegen der in der WO 93/19230 A1 bzw. EP 584 318 B1 vertretenen Theorie als wesentlich vorteilhafter herausgestellt, wenn der Kühlgasstrom nicht unmittelbar nach dem Austritt der Endlosformkörper 2 aus der Düse, sondern erst in einem Abstand von der Düse auf die Endlosformkörper 2 auftritt. Um optimale Fasereigenschaften zu erzielen, sollte der Kühlgasstrom turbulent sein und eine Geschwindigkeitskomponente in Extrusionsrichtung aufweisen, wie dies in der WO 03/57951 A1 und in der WO 03/57952 A1 beschrieben ist.

Das Fällbad 28 reichert sich zunehmend mit tertiärem Aminoxid an, so dass es mittels einer Wiedergewinnungseinrichtung 30 laufend regeneriert werden muss. Hierzu wird der Wiedergewinnungseinrichtung 30 über eine Leitung 31, die beispielsweise mit einem Überlauf des Fällbades verbunden ist, im Betrieb die Flüssigkeit aus dem Fällbad zugeführt. Die Wiedergewinnungseinrichtung 30 entzieht der Flüssigkeit das tertiäre Aminoxid und führt über eine Leitung 32 gereinigtes Wasser zurück. Nicht wiederverwendbare Abfallstoffe werden über eine Leitung 33 aus der Vorrichtung 1 ausgeschleust und entsorgt.

In der Wiedergewinnungseinrichtung 30 wird das Aminoxid vom Wasser getrennt und über eine Leitung 34 einer weiteren Mischungseinrichtung 35 zugeführt, welcher über einer Leitung 36 ebenfalls frisches Aminoxid zugeführt ist. Das regenerierte Aminoxid aus der Leitung 34 wird mit dem frischen Aminoxid 36 vermischt und über die Leitung 21 der Scherzone 19 zugeführt.

Über einen Ionentauscher, beispielsweise der Firma Rohm und Haas, Amberlite GT 73, oder Filter 37 können Metallionen aus dem regenerierten Aminoxid entfernt werden.

Die Mischungseinrichtung 35 und die Reinigungseinrichtung 37 können von der Steuereinrichtung 17 in Abhängigkeit von dem von den Sensoren 23 gemessenen Metallionen-Gehalt gesteuert werden.

Anschließend werden die Endlosformkörper weiter behandelt, beispielsweise in einer Vorrichtung 38 gewaschen, aviviert, chemisch behandelt, um die Vernetzungseigenschaften zu beeinflussen, und/oder getrocknet sowie in einer Vorrichtung 39 weiter abgepresst. Die Endlosformkörper können durch eine nicht dargestellte Schneidevorrichtung auch zu Stapelfasern verarbeitet und in Vliesform aus der Vorrichtung 1 geleitet werden.

Die gesamte Förderung der Celluloselösung im Leitungssystem 8' erfolgt kontinuierlich, wobei im Leitungssystem 8' Pufferbehälter 40 vorgesehen sein können, um Schwankungen der Fördermenge und/oder des Förderdruckes aufzufangen und eine kontinuierliche Bearbeitung ohne die Entstehung von Totwassergebieten zu ermöglichen. Das Leitungssystem 8' ist mit einem Heizsystem (nicht gezeigt) ausgestattet, um die Celluloselösung während der Förderung auf einer Temperatur zu halten, in der ohne Zersetzung des tertiären Aminoxids die Viskosität für eine wirtschaftliche Förderung ausreichend niedrig ist. Die Temperatur der Celluloselösung in dem Leitungsbereich 8' beträgt dabei zwischen 75 und 110°C.

Gleichzeitig wird durch die hohe Temperatur die Homogenisierung und gleichmäßige Durchmischung gefördert, die durch statische oder rotierende Mischer erhöht werden kann.

Die Verweilzeit der Cellulosesuspension oder -lösung im Leitungssystem 8, 8' von der Dickstoffpumpe 7 bis zum Extrusionskopf 25 kann je nach dem Polymerisationsgrad der verarbeiteten Cellulose und bei Verwendung spezieller Zusätze für die Cellulosesuspension und Celluloselösung zwischen 5 Minuten und 2 Stunden, vorzugsweise etwa 30 bis 60 Minuten, betragen.

Die Durchführung des erfindungsgemäßen Verfahrens wird nun anhand von Versuchsbeispielen beschrieben.

Damit der gezielte enzymatische Abbau der Cellulose auch in größeren Anlagen sicher eingestellt werden kann, wurde in Laborversuchen die Suspensionsherstellung näher untersucht, da die Misch- und Rührvorgänge sehr komplex verlaufen und sich Turbulenzmechanismen auch auf die Rheologie des behandelten Gutes auswirken können. Daher war es vor Übertragung in den großtechnischen Maßstab notwendig, das enzymatische gesteuerte Abbauverhalten (DP Reduktion) gezielt zu untersuchen. In den Labormodellversuchen wurden die in der Rührtechnik bekannten Kennzahlen (Newton-Zahl, Reynolds-Zahl, Froude Zahl) ermittelt. Die Konzentrationen, Temperaturen, Mischzeiten und Mischgüte wurden exakt beobachtet und ermittelt, um Aussagen über das Abbauverhalten während der Emulsions- oder Suspensionsbildung zu erhalten. Die exakte Konzentrationseinstellung erfolgt durch kontinuierliche Durchflussmessgeräte für Emulsions- oder Suspendierungsmittel, die Zugabe der Cellulose erfolgte genau gemessen über ein Differentialdosierwägesystem ebenfalls kontinuierlich. Die Suspensionskriterien wie Befüllhöhe, Rührdauer und Konzentration an Emulsions-Suspensionspartikel über die Behälterhöhe wurden durch das Einführen einer Mess-Probenlanze und die Entnahme von suspendiertem Material ermittelt. Als Rührorgan wurde ein Impellerrüher eingesetzt. Es können jedoch ebenfalls Propeller, Schrägblattrührer, Scheibenrührer, gezahnte Rührer, Ankerrührer als auch Wendelrührer oder Koaxialrührwerke eingesetzt werden. Die an einen Antriebsmotor angeschlossene Rührwerkswelle wird drehzahlmäßig gesteuert und überwacht. Ebenso erfolgt die Überwachung der Antriebsleistung, der eingetragenen Energie sowie des Drehmomentes während des Emulgier- bzw. Suspendiervorganges zur Steuerung des enzymatischen Abbaues der Cellulose und damit zur Steuerung des Polymerisationsgrades.

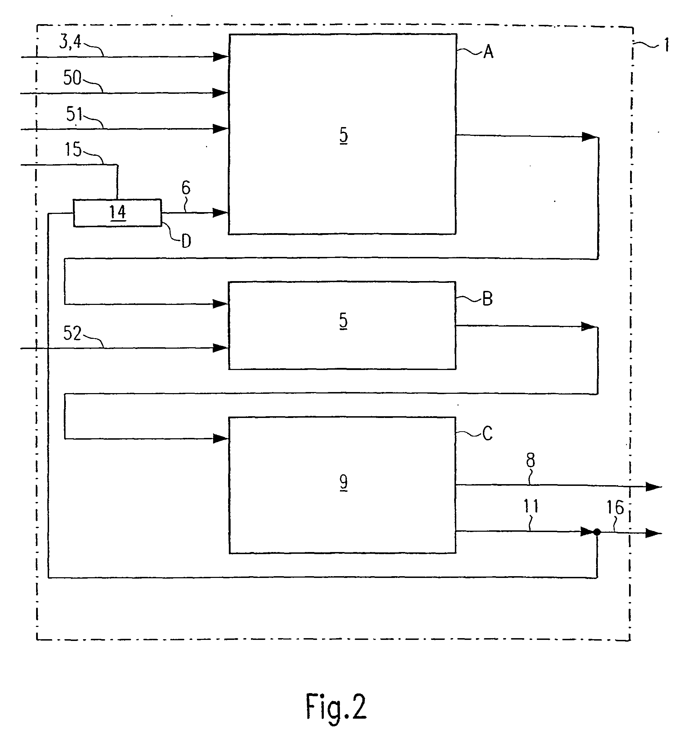

Eine erste Reihe von Versuchen befasst sich mit der Zellstoffvorbehandlung zur Herstellung der Cellulosesuspension und der Untersuchung des Presswassers. Im Folgenden wird dabei auf die schematische Darstellung der Vorbehandlung in Fig. 2 verwiesen, ferner werden die Bezugszeichen der Fig. 1 verwendet.

### Versuchsbeispiel 1

In einem Pulper 5 der Firma Grubbens mit einem Nettofüllvolumen von 2 m³ wurde in einem Verfahrensschritt A Zellstoff 3, 4 (vgl. Fig. 1) vom Typ MoDo Dissolving Wood Pulp Fichtensulfitzellstoff mit Wasser 6 in einem Mischungsverhältnis 1:17 (Feststoffdichte 5,5 %) angesetzt. Der Zellstoff wies ein Cuoxam DP 650 auf und einen α-Cellulosegehalt größer oder kleiner 95 %. Es können die im Handel erhältlichen Cellulosen auf Hardwood- bzw. Softwood-Basis verwendet werden. Hemicellulosegehalte im Zellstoff im Bereich von 2 bis 20 % können ebenso im Prozess verarbeitet werden. Andere mögliche Zellstoffe sind Sappi Eukalyptus, Bacell Eucalyptus, Tembec Temfilm HW, Alicell VLV und Weyerhäuser α-Cellulose von weniger als 95 %. Das zugeführte Wasser 6 bestand zu 30 Teilen aus vollentsalztem Frischwasser 15 und zu 70 Teilen aus Presswasser.

Unter heftigem Rühren wurde technisch reine Ameisensäure 50 im Verhältnis 1:140 und eine flüssige Enzympräparation 51 im Verhältnis 1:200 jeweils bezogen auf den Cellulosegehalt beigemengt. Für eine Dauer von etwa 35 Minuten wurde dann eine enzymatische Vorbehandlung durchgeführt, bis eine homogene Cellulosesuspension vorlag. Als Enzympräparation 52 kann ein Cellulaseenzymkomplex wie beispielsweise Cellupract® AL 70 der Firma Biopract GmbH oder Cellusoft der Firma Novo Nordisk verwendet werden.

Anschließend wurde die Vorbehandlung in einem Verfahrensschritt B durch Beigabe von Natronlauge 52 im Verhältnis 1:500 bezogen auf den Cellulosegehalt der Cellulosesuspension im Pulper 5 abgebrochen.

Die Cellulosesuspension wurde dann in einem Verfahrensschritt C in einem als Pressmittel 9 dienenden Vakuumbandfilter mit anschießender Abpressung der Firma Pannevis auf ca. 50 % entwässert, so dass der abgepresste Zellstoff einen Trockengehalt von ca. 50 % aufwies. Aus Schritt C wurde der abgepresste Zellstoff dann über die Leitung 8 zur Erzeugung einer Celluloselösung enthaltend NMMNO, Wasser und Cellulose weitergeleitet. Diese Schritte sind in Fig. 2 der Einfachheit halber nicht dargestellt.

Das Presswasser wurde im Pressmittel 9 aufgefangen und über die Leitung 11 (vgl. Fig. 1) abgeleitet. Ca. 75 % des Presswassers wurden zurück zum Pulper 5 geleitet, ca. 25 % des Presswassers wurden über die Leitung 16 einer Abwasserreinigung zugeführt.

Der Polymerisationsgrad des Zellstoffes wurde immer so gewählt, dass man in der Spinnlösung einen DP (Degree of Polymerization) von etwa 450 bis etwa 550 erreichte. In der Spinnlösung wurde die Cellulosekonzentration auf ca. 12 % eingestellt.

Das im System 1 verbleibende Presswasser wurde in einer Mischungseinrichtung 14 (vgl. Fig. 1) in einem Verfahrensschritt D mit dem voll entsalzten Wasser wieder vermischt, wie oben beschrieben ist.

### Versuchsbeispiel 2

In einem weiteren Versuch wurden sämtliche Schritte des Versuchsbeispiels 1 wiederholt. Lediglich im Verfahrensschritt A wurde die Menge der zugesetzte Enzympräparation auf 1:125 bezogen auf den Cellulosegehalt der Cellulosesuspension verringert.

### Versuchsbeispiel 3

In einem weiteren Versuch wurden die Schritte aus den Versuchsbeispielen 1 und 2 wiederholt und lediglich im Verfahrensschritt A keine Enzympräparation mehr zugegeben.

### Ergebnisse der Versuchsbeispiele 1 bis 3

Um die Wirksamkeit des erfindungsgemäßen Verfahrens zu überprüfen, wurde das.beim Abpressvorgang aufgefangene Presswasser auf seinen Kupfer- und Eisen-lonengehalt analysiert, außerdem wurde der chemische Sauerstoffbedarf bestimmt.

Als Ergebnis dieses Versuches lässt sich festhalten, dass durch die Kreislaufführung eines Teiles des Presswassers in den ersten Pulpzyklen die erfassten Messwerte der Inhaltsstoffe ansteigen. Da jedoch permanent ein Teil des Presswassers mit den darin gelösten Inhaltsstoffen ausgeschleust wird, stellt sich nach einiger Zeit ein konstanter Zustand ein, in dem der Gehalt der Inhaltsstoffe, insbesondere der Metallionen, gleich bleibt.

Insgesamt wurden bei der Presswasserrückführung ca. 10 % der vom Zellstoff 3, 4 eingebrachten Eisenionen und ca. 40 % der vom Zellstoff eingebrachten Kupferionen entfernt. Im kontinuierlichen Anlagenbetrieb dürfte bei Rückführung des Presswassers der auf die Menge des vom Zellstoff eingetragenen Eisens bezogene prozentuelle Anteil des aus dem System 1 ausgebrachten Eisens zwischen 22 % und 35 % liegen.

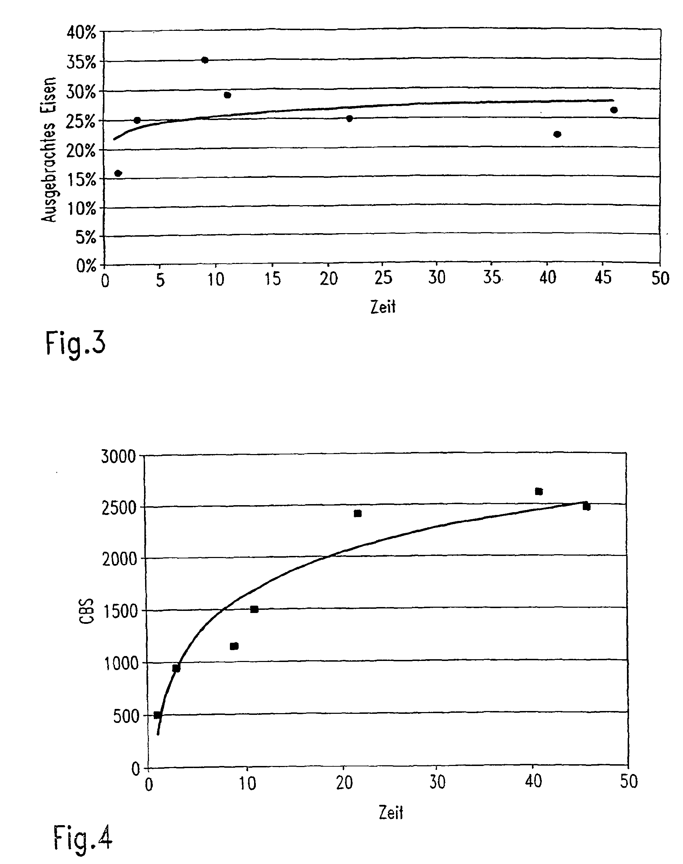

Fig. 3 gibt schematisch den zeitlichen Verlauf der Eisenionenausbringung wieder.

Der stabile Endzustand des Systems 1 wird, wie die Versuchsbeispiele 1 bis 3 zeigen, dabei unabhängig von der Menge der eingebrachten Enzyme bei der Cellulosevorbehandlung erreicht.

Dies wird auch durch die zeitliche Änderung des chemischen Sauerstoffbedarfs (CSB) bestätigt, wie er in Fig. 4 dargestellt ist. Der chemische Sauerstoffbedarf wurde nach DIN 38409 im Presswasser bestimmt und nähert sich mit zunehmender Dauer der Presswasserrückführung einem konstanten Wert an.

Des Weiteren wurde in den gemäß den Versuchsbeispielen 1 bis 3 erhaltenen Celluloselösungen der Polymerisationsgrad und daraus der DP-Abbau sowie die Onset-Temperatur der Spinnlösung als Indikator für deren Stabilität bestimmt. Die Ergebnisse für die Versuchsbeispiele sind in der Tabelle 1 dargestellt.

**Tabelle 1**

| Versuchsbeispiel | DP-Abbau [%] | Tₒₙₛₑₜ °C |
|---|---|---|
| 1 | 27,5 | 165 |
| 2 | 27 | 165 |
| 3 | 9 | 160 |

Wie sich aus Tabelle 1 ergibt, ist die durch Presswasserrückführung erhaltene Celluloselösung stabil und weist eine Onset-Temperatur von wenigstens 160° C auf. Die Onset-Temperatur nach Tabelle 1 gemäß dem erfindungsgemäßen Verfahren mit Presswasserrückführung liegt auch oberhalb der Onset-Temperatur, wie sie bei dem Verfahren der WO 95/08010 erzielt wird und die in der Praxis um 150° C liegt.

Anhand dieser Untersuchungen zeigt sich, dass trotz der Presswasserrückführung die Onset-Temperaturen noch über den Onset-Temperaturen der Trockenverarbeitung von Cellulose liegen und durch eine enzymatische Vorbehandlung der Cellulose gesteigert werden können. Damit ist die Presswasserrückführung für den industriellen Einsatz geeignet.

In einer weiteren Versuchsreihe wurde die Auswirkung der im Presswasser enthaltenen Stoffe auf die Stabilität der Celluloselösung untersucht. Hierzu wurde bei den Versuchsbeispielen 1 und 3 jeweils ein Konzentrat aus 5 l Presswasser im Verhältnis 1:270 der Celluloselösung beigemengt und auf eine Presswasserrückführung verzichtet.

In beiden Fällen, einmal gemäß der Vorgehensweise von Versuchsbeispiel 1 ohne enzymatische Vorbehandlung und einmal gemäß der Vorgehensweise von Versuchsbeispiel 3 mit enzymatischer Vorbehandlung ergibt sich durch das Presswasserkonzentrat jeweils ein Absinken der Onset-Temperatur auf ca. 141° C. Somit ist nachgewiesen, dass das Presswasser grundsätzlich die Stabilität der Celluloselösung herabsenkt.

Diese Destabilisierung der Celluloselösung lässt sich jedoch durch die Ausschleusung des mit destabilisierenden Metallionen Behandlungsmediums vermeiden. Der Anteil des rückgeführten Behandlungsmediums hängt von der Art der verwendeten Cellulose ab, wie die folgende Tabelle zeigt.

Der Eisen- und Kupfergehalt sowie der Metallionen-Gehalt der Cellulose insgesamt variiert bei den verschiedenen Arten von Cellulose beträchtlich, wie aus der Tabelle 2 hervorgeht. Der Metallgehalt der verschiedenen Cellulosearten wurde durch Veraschen im Platintiegel nach DIN EN ISO 11885 (E22) sowie mit der Flammen-AAS bestimmt.

**Tabelle 2**

| **Zellstoffeinsatz** | | | | | | | | |
|---|---|---|---|---|---|---|---|---|
| Inhaltsstoffe Zellstoff | Zellstoff 1 mg/kg | Zellstoff 2 mg/kg | Zellstoff 3 mg/kg | Zellstoff 4 mg/kg | Zellstoff 5 mg/kg | Zellstoff 6 mg/kg | Zellstoff 7 mg/kg | Zellstoff 8 mg/kg |
| Fe | 1,3 | 2,0 | 1,6 | 5,8 | 2,2 | 2,6 | 14 | 13 |
| Mn | < 0,3 | < 0,1 | 0,2 | 0,33 | k.A. | < 0,3 | 0,4. | < 0,3 |
| Mg | 2 | 2 | 226 | 32 | 138 | 2 | 21 | 7,8 |
| Co | 0,3 | < 0,3 | < 0,3 | < 0,3 | < 0,3 | < 03, | < 0,3 | < 0,3 |
| Ca | 54 | 4 | 37 | 64 | 30 | 6 | 130 | 27 |
| Cr | < 0,3 | < 0,3 | 1,4 | < 0,3 | < 0,3 | 0,4 | < 0,3 | < 0,3 |
| Mo | < 0,3 | < 0,1 | < 0,1 | < 0,1 | < 0,3 | < 0,3 | < 0,3 | < 0,3 |
| Ni | < 0,3 | < 0,3 | < 0,3 | < 0,3 | < 0,3 | < 0,3 | < 0,3 | < 0,3 |
| Cu | 0,3 | < 0,2 | 0,2 | < 0,3 | < 0,3 | < 0,3 | 0,3 | 0,3 |
| Na | 396 | 48 | 93 | 92 | 263 | 176 | 335 | 8,2 |

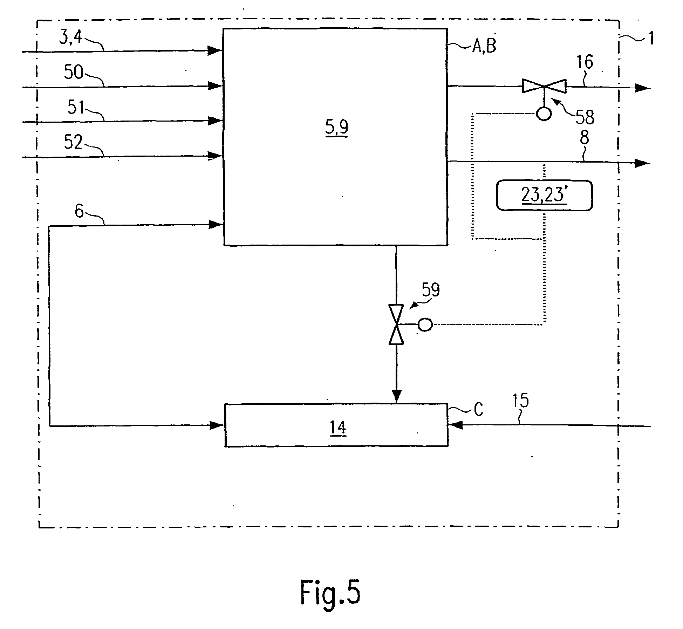

Eine letzte Versuchsreihe wurde mit dem schematischen Versuchsaufbau der Fig. 5 gefahren. In Fig. 5 sind dabei die Bezugszeichen der Fig. 1 und 2 für Elemente mit ähnlicher oder gleicher Funktion verwendet.

Mit dem Aufbau der Fig. 5 wurde die dem Pulper 5 rückgeführte Menge an Presswasser dem Eisen- und Kupfergehalt der ausgepressten Cellulose angepasst.

Bei der Anordnung der Fig. 5 wurde durch die Sensoren 23, 23' (vgl. Fig. 1) als für den Metallionen-Gehalt repräsentative Werte der Eisenionen- und Kupferionengehalt gemessen.

Durch die Steuerung des Anteils des Presswassers in dem dem Pulper 5 zugeführten Wasser 6 wurde die Eisenkonzentration möglichst knapp unterhalb 10 mg/kg atro und die Kupferkonzentration knapp unterhalb 0,5 mg/kg atro gehalten. Diese Werte waren für eine ausreichende Stabilität der Celluloselösung in der Leitung 8 bei gleichzeitig maximaler Einbehaltung des Presswassers innerhalb des Systems 1 und demzufolge minimaler Ausschleusung des Presswassers 16 aus dem System 1 möglich.

Die Steuerung des Metallionen-Gehaltes erfolgte in der Weise, dass bei Überschreiten eines dieser beiden Grenzwerte die aus dem System 1 ausgeschleuste, zur Abwasserreinigungsanlage geführte Presswassermenge durch Öffnen eines Ventils 58 erhöht wurde. Gleichzeitig wurde durch Schließen des Ventils 59 der Anteil an rückgeführtem Presswasser im Vorbehandlungsschritt reduziert.

Falls eine direkte Verpulpung der Cellulose 3, 4 in Aminoxid stattfindet, so kann die erfindungsgemäße Einstellung des Metallionen-Gehalts auch über das aus dem Spinnbad 28 wiedergewonnene tertiäre Aminoxid erreicht werden. Hierzu kann in Abhängigkeit von dem Metallionen-Gehalt, wie er von den Sensoren 23 und 23' erfasst wird, sowie in Abhängigkeit von dem vorab in der Cellulose 3, 4 bestimmten Metallionen-Gehalt, der Reinigungsgrad am Metallionen-Filter 37 und/oder der Anteil des frisch zugeführten tertiären Aminoxids 36 zu dem regenerierten tertiären Aminoxid 34 eingestellt werden. Die Steuerung funktioniert damit ähnlich wie bei der Presswasserrückführung.

In einer Abwandlung des in Fig. 1 beschriebenen Verfahrens kann in der Wiedergewinnungseinrichtung 30 aus dem Spinnbad 28 wiedergewonnenes Wasser anstelle oder zusammen mit dem Presswasser zum Pulper 5 rückgeführt werden.

Der Metallionenfilter 37, wie er bei der Widergewinnung des tertiären Aminoxids aus dem Spinnbad 28 verwendet wird, kann selbstverständlich auch zur Reinigung des zurückgeführten Presswassers verwendet werden.

### Versuchsbeispiel 4

In diesem Versuchsbeispiel wurde das Verfahren gemäß Versuchsbeispiel 1 durchgeführt und der DP-Wert in der Cellulose, zu verschiedenen Stadien der Enzymbehandlung, in der Cellulosesuspension und in der Celluloselösung gemessen. Tabelle 3 zeigt die erhaltenen Werte. Aus dieser Tabelle ergibt sich, dass bis zur Extrusion des Endlosformkörpers der Polymerisationsgrad von ursprünglich 628 in der Cellulose 3, 4 um 20 % auf 504 verringert ist. Einen wesentlichen Anteil an der Verringerung des Polymerisationsgrades hat dabei die enzymatische Vorbehandlung, die zudem den Vorteil bietet, dass ihre Dauer gut mit dem Polymerisationsabbau korreliert. Die Verringerung des Polymerisationsgrades kann auf einfache Weise verhindert werden, wenn die Dauer der Enzymbehandlung so eingestellt wird, dass beispielweise am Ende der Enzymbehandlung ein Polymerisationsgrad von wenigstens 590 DP bis 600 DP vorliegt. Ferner kann der Transport der Cellulosesuspension und/oder der Celluloselösung so beschleunigt werden, dass vor der Extrusion der Celluloselösung ein Polymerisationsgrad von wenigstens 550 DP erhalten wird.

**Tabelle 3**

| | DP-Wert | Abbau Gesamt |
|---|---|---|
| Cellulose | 628 | 0 % |
| Enzymbehandlung 30 Minuten | 603 | 4,14 % |
| Enzymbehandlung 45 Minuten | 592 | 5,73 % |
| Enzymbehandlung 60 Minuten | 582 | 7,32 % |
| Cellulosesuspension | 582 | 7,32 % |
| Celluloselösung | 538 | 14,33 % |
| Endlosformkörper | 504 | 19,75 % |

### Versuchsbeispiel 5

In diesem Versuch wurde das Verfahren ähnlich dem Versuchsbeispiel 4 durchgeführt, es wurde jedoch nur der Aktivierungsschritt betrachtet, der DP Wert in der Cellulosesuspension, in der Spinnlösung und im Endlosformkörper wurden nicht gemessen.
Der Ausgangszellstoff wurde mit einem DP 780 gewählt und die Enzymkonzentration wurde um den Faktor 0,5 erhöht. Weiters wurde zusätzlich zur Erfassung des DP Wertes auch die Stromaufnahme des Rührwerkes während dem Aktivierungsschritt erfasst und auf das Behältervolumen sowie die Feststoffkonzentration normiert. Tabelle 4 zeigt die bei der Versuchsdurchführung gemessenen Werte.

**Tabelle 4**

| Verfahrensschritt | Behandlungszeit [s] | Stromaufnahme [kW / m³ Vorlageflüssigkeit) | Cellulosegehalt [%] | Leistungseintrag [kW / kg Cell] | DP Cell |
|---|---|---|---|---|---|
| | | | | | |
| Flüssigkeitsvorlage | 300 | 0,4 | 0 | | - |
| Zellstoffzugabe 1 | 360 | 0,49 | 1,0% | 0,0049 | 780 |
| Zellstoffzugabe 2 | 420 | 0,52 | 2,0% | 0,0104 | 780 |
| Zellstoffzugabe 3 | 480 | 0,8 | 3,0% | 0,0240 | 780 |
| Zellstoffzugabe 4 | 540 | 1,81 | 4,0% | 0,0724 | 780 |
| Zellstoffzugabe 5 | 600 | 2,55 | 5,0% | 0,1275 | 780 |
| homogenisieren | 660 | 2,53 | 5,0% | 0,1265 | 780 |
| homogenisieren | 720 | 2,4 | 5,0% | 0,1200 | 780 |
| homogenisieren | 780 | 2,5 | 5,0% | 0,1250 | 780 |
| Enzymbeimengung | 780 | 2,51 | 5,0% | 0,1255 | 780 |
| homogenisieren | 840 | 2,53 | 5,0% | 0,1265 | 780 |
| homogenisieren | 900 | 2,5 | 5,0% | 0,1250 | 773 |
| homogenisieren | 960 | 2,41 | 5,0% | 0,1205 | 765 |
| homogenisieren | 1020 | 2,3 | 5,0% | 0,1150 | 751 |
| homogenisieren | 1080 | 2,17 | 5,0% | 0,1085 | 747 |
| homogenisieren | 1380 | 1,88 | 5,0% | 0,0940 | 701 |
| homogenisieren | 1680 | 1,65 | 5,0% | 0,0825 | 657 |
| homogenisieren | 1980 | 1,52 | 5,0% | 0,0760 | 613 |
| homogenisieren | 2280 | 1,5 | 5,0% | 0,0750 | 569 |
| homogenisieren | 2580 | 1,45 | 5,0% | 0,0725 | 522 |

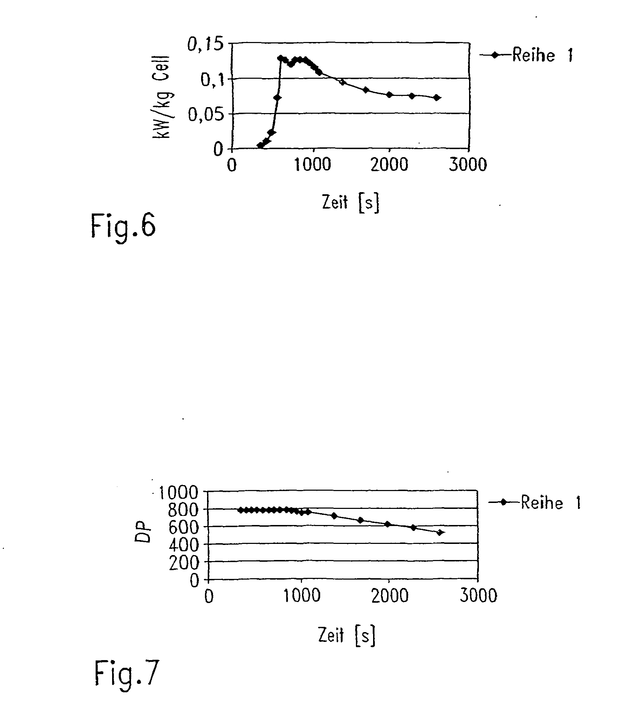

In Fig. 6 ist der Verlauf der vom Rührwerk eingebrachten Leistung in Kilowatt pro Kilogramm Cellulose über die Behandlungszeit der Cellulosesuspension im Rührwerk dargestellt. Fig. 7 zeigt die Änderung des Polymerisationsgrades im Rührwerk.

Wie aus Tabelle 4 sowie den Fig. 6 und 7 zu erkennen ist, sinkt der Polymerisationsgrad mit zunehmender Behandlungszeit der Cellulosesuspension.

Der Abbau des Polymerisationsgrades ist an dem deutlich verringerten Leistungseintrages des Rührwerks zu erkennen: Mit abnehmendem Polymerisationsgrad sinkt gleichzeitig der Leistungsantrag in das Rührwerk.

Folglich lässt sich während der Herstellung der Cellulosesuspension, insbesondere bei der enzymatischen Vorbehandlung, im Rührwerk die Leistung des Rührwerkes als eine für den Polymerisationsgrad repräsentative Größe zur Steuerung des Polymerisationsgrades verwenden. Dasselbe Vefahren zur Überwachung des Polymerisationsgrades ist auch bei den nachgeschalteten Rührwerken möglich. Sinkt beispielsweise die Leistung des Rührwerkes unter einen vorbestimmten, z. B. durch Versuche ermittelten Grenzwert, ist dies ein Zeichen dafür, dass der Polymerisationsgrad unter einen für diese Verarbeitungsstufe vorgesehenen Wert sinkt oder gesunken ist. Als Folge wird die restliche Aufenthaltszeit der Cellulosesuspension und/oder Celluloselösung in dem Verfahrensschritt verkürzt.

## Patentansprüche

1. Verfahren zum Herstellen von Lyocell-Fasern, bei dem eine Cellulose (3, 4) mit einem vorbestimmten Polymerisationsgrad eingebracht und aus der Cellulose (3, 4) unter Beimengung eines Behandlungsmediums (6, 21) eine Celluloselösung oder zunächst eine Cellulosesuspension und aus dieser dann die Celluloselösung hergestellt wird und bei dem die Celluloselösung zu Endlosformkörpern (2) extrudiert wird, **dadurch gekennzeichnet, dass** der Polymerisationsgrad der Cellulose (3, 4), der Cellulosesuspension und/oder der Celluloselösung überwacht wird und dass in Abhängigkeit von dem erfassten Polymerisationsgrad die Aufenthaltsdauer der Cellulose von ihrem Einbringen bis zu ihrer Extrusion auf höchstens 80 min und der Polymerisationsgrad der Celluloselösung kurz vor der Extrusion auf einen DP-Wert von wenigstens 400 DP eingestellt wird.

2. Verfahren nach Anspruch 1, **dadurch gekennzeichnet, dass** die Cellulosesuspension einer enzymatischen Vorbehandlung unterworfen wird.

3. Verfahren nach Anspruch 2, **dadurch gekennzeichnet, dass** die Dauer der enzymatischen Vorbehandlung in Abhängigkeit vom Polymerisationsgrad der eingebrachten Cellulose eingestellt wird.

4. Verfahren nach Anspruch 3, **dadurch gekennzeichnet, dass** die enzymatische Vorbehandlung bei einer Cellulose (3, 4) mit niedrigerem Polymerisationsgrad über ein kürzere Zeitdauer durchgeführt wird als bei einer Cellulose (3, 4) mit einem höheren Polymerisationsgrad.

5. Verfahren nach einem der Ansprüche 2 bis 4, **dadurch gekennzeichnet, dass** die enzymatische Vorbehandlung zwischen 20 Minuten und 80 Minuten eingestellt wird.

6. Verfahren nach einem der Ansprüche 2 bis 5, **dadurch gekennzeichnet, dass** bei der enzymatischen Vorbehandlung wenigstens ein Cellulaseenzymkomplex der Cellulosesuspension beigemengt wird.

7. Verfahren nach einem der oben genannten Ansprüche, **dadurch gekennzeichnet, dass** die Celluloselösung durch ein beheiztes Leitungssystem (8, 8') zur Extrusion gefördert wird und dass die Fördergeschwindigkeit der Celluloselösung im Leitungssystem (8, 8') in Abhängigkeit vom Polymerisationsgrad eingestellt wird.

8. Verfahren nach Anspruch 7, **dadurch gekennzeichnet, dass** die Fördergeschwindigkeit der Celluloselösung bei Verarbeitung einer Cellulose mit einem niedrigeren Polymerisationsgrad in der Celluloselösung höher eingestellt wir als die Fördergeschwindigkeit bei Verarbeitung einer Cellulose in der Celluloselösung mit einem höheren Polymerisationsgrad.

9. Verfahren nach einem der oben genannten Ansprüche, **dadurch gekennzeichnet, dass** die Aufenthaltsdauer der Cellulose von ihrem Einbringen bis zu ihrer Extrusion in der Celluloselösung höchstens zwei Stunden beträgt.

10. Verfahren nach einem der oben genannten Ansprüche, **dadurch gekennzeichnet, dass** die Aufenthaltsdauer der Cellulose von ihrem Einbringen bis zu ihrer Extrusion in der Celluloselösung wenigstens fünf Minuten beträgt.

11. Verfahren nach einem der oben genannten Ansprüche, **dadurch gekennzeichnet, dass** Fördergeschwindigkeit der die Cellulosesuspension und/oder Celluloselösung fördernden Pumpenanordnung (7, 7') in Abhängigkeit vom Polymerisationsgrad in der Cellulose (3, 4), der Cellulosesuspension und/oder der Celluloselösung eingestellt wird.

12. Verfahren nach einem der oben genannten Ansprüche, **dadurch gekennzeichnet, dass** der Polymerisationsgrad der Celluloselösung kurz vor der Extrusion auf einen DP-Wert von wenigstens 450 DP bis 550 DP eingestellt wird.

13. Verfahren nach einem der oben genannten Ansprüche, **dadurch gekennzeichnet, dass** die Dauer einer enzymatischen Vorbehandlung der Cellulose so eingestellt wird, dass ihr DP-Wert unmittelbar nach Beendigung der enzymatischen Vorbehandlung wenigstens 500 beträgt.

14. Verfahren nach einem der oben genannten Ansprüche, **dadurch gekennzeichnet, dass** als repräsentative Größe für den Polymerisationsgrad der Cellulosesuspension die Leistung eines Rührwerkes überwacht wird.

15. Vorrichtung (1) zur Herstellung von Lyocell-Fasern, mit einer Mischeinrichtung (5, 19, 22), der eine Cellulose (3, 4) zuführbar und in der unter Zugabe eines Behandlungsmediums (6, 21) eine Celluloselösung direkt oder unter Bildung einer Cellulosesuspension verarbeitbar ist, mit einem Spinnkopf (25), durch den die Celluloselösung zu Endlosformkörpern extrudierbar ist, und mit einer Fördereinrichtung (7, 7'), durch welche die Cellulosesuspension und/oder die Celluloselösung von der Mischeinrichtung (5, 19, 22) zum Spinnkopf (25) förderbar ist, **gekennzeichnet durch** eine Überwachungseinrichtung (23'), **durch** welche ein Polymerisationsgrad der Cellulose, der Cellulosesuspension und/oder der Celluloselösung im Betrieb der Vorrichtung (1) überwachbar ist, und **durch** eine Steuereinrichtung (17), **durch** welche die Verarbeitungsdauer vom Einbringen der Cellulose bis zu deren Extrusion im Spinnkopf (25) in Abhängigkeit vom erfassten Polymerisationsgrad einstellbar ist.

16. Vorrichtung (1) nach Anspruch 15, **dadurch gekennzeichnet, dass** die Förderleistung der Fördereinrichtung (7, 7') durch die Steuereinheit (17) in Abhängigkeit vom Polymerisationsgrad steuerbar ausgestaltet ist.

17. Vorrichtung (1) nach Anspruch 15 oder 16, **dadurch gekennzeichnet, dass** ein Sensor vorgesehen ist, durch den die Leistung eines Rührwerks (5, 20, 22) überwachbar ist.

## Claims

1. Method for producing Lyocell fibres in which a cellulose (3, 4) with a predetermined degree of polymerisation is introduced and a cellulose solution, or initially a cellulose suspension and from this then the cellulose solution, is produced from the cellulose (3, 4) with the addition of a treatment medium (6, 21), and in which the cellulose solution is extruded to form endless moulded bodies (2), **characterised in that** the degree of polymerisation of the cellulose (3, 4), the cellulose suspension and / or the cellulose solution is monitored and that, in dependence of the measured degree of polymerisation, the residence time of the cellulose from its introduction through to its extrusion is set to be 80 min at the most and the degree of polymerisation of the cellulose solution shortly before extrusion is set to a DP value of at least 400 DP.

2. Method according to Claim 1, **characterised in that** the cellulose suspension is subjected to an enzymatic pretreatment.

3. Method according to Claim 2, **characterised in that** the duration of the enzymatic pretreatment is adjusted in dependence of the degree of polymerisation of the introduced cellulose.

4. Method according to Claim 3, **characterised in that** the enzymatic pretreatment for a cellulose (3, 4) with a lower degree of polymerisation is carried out over a shorter time than for a cellulose (3, 4) with a higher degree of polymerisation.

5. Method according to one of the Claims 2 to 4, **characterised in that** the enzymatic pretreatment is set between 20 minutes and 80 minutes.

6. Method according to one of the Claims 2 to 5, **characterised in that** for the enzymatic pretreatment at least one cellulase enzyme complex is added to the cellulose suspension.

7. Method according to one of the above claims, **characterised in that** the cellulose solution is conveyed through a heated pipe system (8, 8') toward extrusion and that the conveying speed of the cellulose solution in the pipe system (8, 8') is set in dependence of the degree of polymerisation.

8. Method according to Claim 7, **characterised in that** during the processing of a cellulose with a lower degree of polymerisation in the cellulose solution the conveying speed of the cellulose solution is set higher than the conveying speed during the processing of a cellulose in the cellulose solution with a higher degree of polymerisation.

9. Method according to one of the above claims, **characterised in that** the residence time of the cellulose from its introduction through to its extrusion in the cellulose solution is at the most two hours.

10. Method according to one of the above claims, **characterised in that** the residence time of the cellulose from its introduction through to its extrusion in the cellulose solution is at least five minutes.

11. Method according to one of the above claims, **characterised in that** the conveying speed of the pump arrangement (7, 7') conveying the cellulose suspension and / or the cellulose solution is set in dependence of the degree of polymerisation in the cellulose (3, 4), the cellulose suspension and / or the cellulose solution.

12. Method according to one of the above claims, **characterised in that** the degree of polymerisation of the cellulose solution shortly before the extrusion is set to a DP value of at least 450 DP to 550 DP.

13. Method according to one of the above claims, **characterised in that** the duration of an enzymatic pretreatment of the cellulose is set such that its DP value is at least 500 immediately after termination of the enzymatic pretreatment.

14. Method according to one of the above claims, **characterised in that** the power of an agitator is monitored as a representative value for the degree of polymerisation of the cellulose suspension.

15. Device (1) for the production of Lyocell fibres, with a mixing device (5, 19, 22), to which a cellulose (3, 4) can be fed and in which a cellulose solution directly or with the formation of a cellulose suspension can be processed with the addition of a treatment medium (6, 21), with a spinning head (25) by which the cellulose solution can be extruded to form endless moulded bodies, and with a conveying device (7, 7') by which the cellulose suspension and / or cellulose solution can be conveyed from the mixing device (5, 19, 22) to the spinning head (25), **characterised by** a monitoring device (23'), by which a degree of polymerisation of the cellulose, of the cellulose suspension and / or of the cellulose solution can be monitored during the operation of the device (1), and by a control device (17), by which the processing duration from the introduction of the cellulose until its extrusion in the spinning head (25) can be set in dependence of the measured degree of polymerisation.

16. Device (1) according to Claim 15, **characterised in that** the conveying capacity of the conveying device (7, 7') is designed to be controlled by the control unit (17) in dependence of the degree of polymerisation.

17. Device (1) according to Claim 15 or 16, **characterised in that** a sensor is provided through which the power of an agitator (5, 20, 22) can be monitored.

## Revendications

1. Procédé de préparation de fibres de lyocell, dans lequel on introduit une cellulose (3,4) ayant un degré de polymérisation prédéterminé et, à partir de la cellulose (3, 4), en incorporant un milieu de traitement (6, 21), on prépare une solution de cellulose ou d'abord une suspension de cellulose, puis, à partir de celle-ci, la solution de cellulose, et dans lequel on extrude la solution de cellulose en corps moulés continus (2), **caractérisé en ce que** l'on contrôle le degré de polymérisation de la cellulose (3,4), de la suspension de cellulose et/ou de la solution de cellulose, et **en ce que**, en fonction du degré de polymérisation déterminé, on ajuste le temps de séjour de la cellulose, de son introduction à son extrusion, à au plus 80 minutes et le degré de polymérisation de la solution de cellulose peu de temps avant l'extrusion à une valeur de DP d'au moins 400 DP.

2. Procédé selon la revendication 1, **caractérisé en ce que** l'on soumet la suspension de cellulose à une prétraitement enzymatique.

3. Procédé selon la revendication 2, **caractérisé en ce que** l'on ajuste la durée du prétraitement enzymatique en fonction du degré de polymérisation de la cellulose introduite.

4. Procédé selon la revendication 3, **caractérisé en ce que** l'on effectue le prétraitement enzymatique pour une cellulose (3, 4) ayant un degré de polymérisation plus faible pendant un temps plus court que pour une cellulose (3, 4) ayant un degré de polymérisation plus élevé.

5. Procédé selon l'une des revendications 2 à 4, **caractérisé en ce que** l'on ajuste le prétraitement enzymatique entre 20 minutes et 80 minutes.

6. Procédé selon l'une des revendications 2 à 5, **caractérisé en ce que**, lors du prétraitement enzymatique, on incorpore au moins un complexe enzymatique de cellulase dans la suspension de cellulose.

7. Procédé selon l'une des revendications précitées, **caractérisé en ce que** l'on fait passer la solution de cellulose dans un système de conduites (8, 8') chauffé à l'extrusion et **en ce que** l'on ajuste la vitesse de transport de la solution de cellulose dans le système de conduites (8, 8') en fonction du degré de polymérisation.

8. Procédé selon la revendication 7, **caractérisé en ce que**, dans le cas du traitement d'une cellulose ayant un degré de polymérisation plus faible dans la solution de cellulose, on ajuste la vitesse de transport de la solution de cellulose à un niveau plus élevé que la vitesse de transport dans le cas du traitement d'une cellulose ayant un degré de polymérisation plus élevé dans la solution de cellulose.

9. Procédé selon l'une des revendications précitées, **caractérisé en ce que** le temps de séjour de la cellulose, de son introduction à son extrusion dans la solution de cellulose s'élève au plus à deux heures.

10. Procédé selon l'une des revendications précitées, **caractérisé en ce que** le temps de séjour de la cellulose, de son introduction à son extrusion dans la solution de cellulose s'élève à au moins 5 minutes.

11. Procédé selon l'une des revendications précitées, **caractérisé en ce que** l'on ajuste la vitesse de transport du dispositif de pompe (7, 7') refoulant la suspension de cellulose et/ou la solution de cellulose en fonction du degré de polymérisation de la cellulose (3, 4), de la suspension de cellulose et/ou de la solution de cellulose.

12. Procédé selon l'une des revendications précitées, **caractérisé en ce que** l'on ajuste le degré de polymérisation de la solution de cellulose peu de temps avant l'extrusion à une valeur de DP d'au moins 450 DP à 550 DP.

13. Procédé selon l'une des revendications précédentes, **caractérisé en ce que** l'on ajuste la durée du prétraitement enzymatique de la cellulose de manière que sa valeur de DP juste après la fin du prétraitement enzymatique soit d'au moins 500.

14. Procédé selon l'une des revendications précitées, **caractérisé en ce que** l'on contrôle la puissance d'un agitateur en tant que grandeur représentative du degré de polymérisation de la suspension de cellulose,.

15. Dispositif (1) pour la préparation de fibres de lyocell, comportant un dispositif de mélange (5, 19, 22) dans lequel on peut introduire une cellulose (3, 4) et dans lequel, en ajoutant un milieu de traitement (6, 21), on peut traiter une solution de cellulose directement ou avec formation d'une suspension de cellulose, une tête de filage (25) par laquelle la solution de cellulose peut être extrudée en corps moulés continus, et un dispositif de transport (7, 7') permettant le transport de la suspension de cellulose et/ou la solution de cellulose du dispositif de mélange (5, 19, 22) à la tête de filage (25), **caractérisé par** un dispositif de contrôle (23') qui permet de contrôler le degré de polymérisation de la cellulose, de la suspension de cellulose et/ou de la solution de cellulose pendant le fonctionnement du dispositif (1), et par un dispositif de commande (17) qui permet d'ajuster la durée du traitement, de l'introduction de la cellulose jusqu'à son extrusion dans la tête de filage (25), en fonction du degré de polymérisation déterminé.

16. Dispositif (1) selon la revendication 15, **caractérisé en ce que** le débit du dispositif de transport (7, 7') peut être ajusté par l'unité de commande (17) en fonction du degré de polymérisation.

17. Dispositif (1) selon la revendication 15 ou 16, **caractérisé en ce qu'**un capteur permettant de contrôler la puissance d'un agitateur mécanique (5, 20, 22) est prévu.
